# EUROPÄISCHE PATENTANMELDUNG

(11) **EP 3 636 846 A1**
(43) Veröffentlichungstag der Anmeldung: **15.04.2020**
(21) Anmeldenummer: 19201619.4
(22) Anmeldetag: 07.10.2019
(51) Int. Cl.: E04B 7/16, E04D 13/03, A01G 9/22, A01G 9/24, F24F 7/02

(54) **LICHTDURCHLÄSSIGES DACHMODUL**

(30) Priorität: 11.10.2018 DE 102018125189
(71) Anmelder: Rudolf Hörmann GmbH & Co. KG, 86807 Buchloe (DE)
(72) Erfinder: Unsin, Christoph, 86807 Buchlohe (DE)
(74) Vertreter: Thoma, Michael

(57) **Zusammenfassung**

Die vorliegende Erfindung betrifft ein lichtdurchlässiges Dachmodul, insbesondere in Form eines Lichtfirsts, mit einem Trägerskelett zum Befestigen an einer Dachkonstruktion und Überspannen einer Dachöffnung, sowie einer lichtdurchlässigen Abdeckplane, die vom Trägerskelett getragen über die Dachöffnung legbar ist. Erfindungsgemäß ist die lichtdurchlässige Abdeckplane beweglich gelagert, wobei eine Aufziehvorrichtung zum Aufziehen der Abdeckplane zum Öffnen der Dachöffnung vorgesehen ist.

## Beschreibung

Die vorliegende Erfindung betrifft ein lichtdurchlässiges Dachmodul, insbesondere in Form eines Lichtfirsts, mit einem Trägerskelett zum Befestigen an einer Dachkonstruktion und Überspannen einer Dachöffnung, sowie einer lichtdurchlässigen Abdeckplane, die vom Trägerskelett getragen über die Dachöffnung legbar ist.

Lichtöffnungen in Dächern wurden traditionell mit Glas- oder Kunststoffplatten verschlossen, die in verschiedenen Konstruktionen Verwendung finden, beispielsweise in aufschwenkbaren Dachfenstern oder auch in Form von Lichtfirsten, bei denen sich die Glas- bzw. Kunststoffplatten entlang des Dachfirsts erstrecken bzw. den Dachfirst bilden, um über den Dachfirst Licht in das darunterliegende Gebäudeinnere zu lassen. Solche Lichtfirste aus Glas- bzw. Kunststoffplatten sind beispielsweise aus den Schriften DE 20 306 175 U1 oder DE 295 15 318 U1 bekannt.

In jüngerer Zeit wurde allerdings vorgeschlagen, solche starren, relativ schweren Glas- bzw. Kunststofflichtplatten durch eine dünne, flexible Folie zu ersetzen und die Dachöffnung lediglich noch mit einer solchen lichtdurchlässigen Abdeckfolie bzw. -plane zu verschließen, um Gewicht und vor allem Kosten von gläsernen Lichtfirsten zu sparen. Einen solchen Lichtfirst mit einer transparenten Abdeckfolie zeigt beispielsweise die Schrift DE 10 2011 053 626 A1.

Um der transparenten Folie eine ausreichende Festigkeit für die auftretenden Wind- und Schneelasten zu geben, schlägt die genannte Schrift DE 10 2011 053 626 A1 vor, eine spezielle Folie zu verwenden, die mittels einer gitterartigen Struktur aus hochfesten Kett- und Schussfäden, beispielsweise aus PEHD zu verstärken, wobei das genannte Verstärkungsgitter vorzugsweise zwischen zwei miteinander verklebten Folienlagen angeordnet sein soll. Die solchermaßen verstärkte Abdeckfolie wird über ein Trägerskelett gelegt, das bogenförmige Rippen umfasst, die den Dachfirst bogenförmig überspannen und die Abdeckfolie tragen.

Je nach Gebäudegröße und -geometrie sollen solche Lichtfirste mehr oder minder großflächig ausgebildet werden, um ausreichend Licht in das Gebäudeinnere zu lassen, wobei hier Firstbreiten von 5 Metern oder auch mehr überspannt bzw. lichtdurchlässig sein sollen. Insbesondere bei sehr breiten Gebäuden wie Werkshallen oder Viehställen reichen die üblichen, seitlichen Fenster in den vertikalen Gebäudewänden nicht aus, um auch den zentralen, mittleren Bereich der Halle ausreichend zu beleuchten, so dass großflächige Lichtfirste bzw. Dachöffnungen vorgesehen werden.

Bei solchen großflächigen Lichtöffnungen im Dach ist jedoch nicht nur die ausreichende Festigkeit und Tragfähigkeit gegen Wind- und Schneelasten eine Herausforderung, sondern auch das Aufheizen des Gebäudeinneren an heißen, strahlenden Sommertagen mit hohen Sonnenständen. Während bei kühlen, grauen Tagen ein hoher Lichtdurchtritt gewünscht ist, um das Gebäudeinnere ausreichend auszuleuchten, führt ein solcher hoher Lichtdurchtritt an klaren Sonnentagen mit hohem Sonnenstand schnell zu einem übermäßigen Aufheizen des Gebäudeinnenraums.

Zum anderen ist es bei den bisherigen Lichtmodulen mit Abdeckplanen so, dass das Trägerskelett an sich für jedes Dach in Einzelfertigung geschaffen werden muss, um das Trägerskelett am jeweiligen Dach bzw. dessen Unterkonstruktion passend montieren und die Abdeckplane in der richtigen Neigung über die Dachöffnung führen zu können. Hierdurch entstehen relativ hohe Kosten und ein großer Zeitaufwand bei der Fertigung.

Hiervon ausgehend liegt der vorliegenden Erfindung die Aufgabe zugrunde, ein verbessertes, lichtdurchlässiges Dachmodul der eingangs genannten Art zu schaffen, das Nachteile des Standes der Technik vermeidet und letzteren in vorteilhafter Weise weiterbildet. Insbesondere soll ein einfach auf verschiedene Dachkonstruktionen montierbares Dachmodul geschaffen werden, das ein verbessertes Raumklima schafft und die genannten thermischen Probleme im Gebäudeinneren vermeidet, ohne eine ausreichende Aufhellung des Rauminneren zu opfern.

Erfindungsgemäß wird die genannte Aufgabe durch ein lichtdurchlässiges Dachmodul gemäß Anspruch 1 gelöst. Bevorzugte Ausgestaltungen der Erfindung sind Gegenstand der abhängigen Ansprüche.

Es wird also vorgeschlagen, die Abdeckplane auf- und zuziehbar anzuordnen, um die von der Abdeckplane verschließbare Dachöffnung bei Bedarf auch öffnen zu können und eine Luftzirkulation zu ermöglichen. Erfindungsgemäß ist die lichtdurchlässige Abdeckplane beweglich gelagert, wobei eine Aufziehvorrichtung zum Aufziehen der Abdeckplane zum Öffnen der Dachöffnung vorgesehen ist. Wird die Aufziehvorrichtung betätigt und die Abdeckplane zumindest teilweise über der Dachöffnung aufgezogen, um die Dachöffnung wie bei einem Cabrio zumindest teilweise freizugeben, kann Stauhitze unter der Dachöffnung austreten bzw. eine Luftzirkulation erreicht werden, die das Raumklima im Gebäudeinneren deutlich verbessert.

Die genannte Aufziehvorrichtung kann dabei grundsätzlich verschieden ausgebildet sein. Um beim Aufziehen der Abdeckplane und Öffnen der Dachöffnung in den an die Dachöffnung angrenzenden Dachsegmenten keinen großen Platzbedarf zu haben, kann die genannte Aufziehvorrichtung in vorteilhafter Weiterbildung der Erfindung zumindest eine Wickeltrommel zum Aufwickeln der Abdeckplane zum Öffnen der Dachöffnung umfassen. Soll die Abdeckplane zumindest teilweise von der Dachöffnung weggezogen werden, kann die Abdeckplane auf der Wickeltrommel aufgewickelt werden, während zum Wiederverschließen der Dachöffnung die Abdeckplane von der Wickeltrommel wieder abgewickelt wird.

Eine solche Wickeltrommel kann sich in vorteilhafter Weise entlang bzw. benachbart zu einer Randseite der Dachöffnung erstrecken, so dass die Abdeckplane im Wesentlichen parallel zu zwei gegenüberliegenden Randseiten der Dachöffnung auf- und zugezogen werden kann. Ist die Dachöffnung ein Dachfirst, kann die genannte Wickeltrommel im Wesentlichen parallel zur Längsrichtung des Dachfirsts ausgerichtet und/oder parallel zu einer unteren Längskante der Dachfirstöffnung angeordnet sein.

Das der Wickeltrommel gegenüberliegende Ende der Abdeckplane kann grundsätzlich in verschiedener Weise geführt und beim Wiederverschließen der Dachöffnung zugezogen werden. Beispielsweise ist es denkbar, das genannte Abdeckfolienende mit einem Antriebselement zu verbinden, welches entlang einer Trägerrippe des Trägerskeletts oder neben dem Trägerskelett an der Dachkonstruktion verschieblich geführt und/oder verfahrbar ist, beispielsweise mittels eines Spindelantriebs oder eines umlaufenden Kettentriebs. Beispielsweise könnte das von der Wickeltrommel ablaufende bzw. gegenüberliegende Planenende mit einer Verstärkungsstrebe verstärkt sein, die an dem besagten Antriebselement angelenkt bzw. damit verbunden ist, so dass durch Betätigung des Antriebselements die zuvor aufgewickelte Abdeckplane wieder von der Wickeltrommel abgezogen werden kann, um die Dachöffnung wieder zu verschließen.

In besonders vorteilhafter Weiterbildung der Erfindung kann die Abziehvorrichtung jedoch auch zwei einander gegenüberliegend angeordnete Wickeltrommeln umfassen, so dass die Abdeckplane zwischen den Wickeltrommeln hin und her gewickelt werden kann. Wird die Abdeckplane auf eine Wickeltrommel aufgewickelt, wickelt die gegenüberliegende Wickeltrommel die Abdeckplane bzw. ein damit verbundenes Netz und/oder eine damit verbundene Seil- und/oder Riemenanordnung ab. Soll die Abdeckplane umgekehrt wieder vollständig über die Dachöffnung gezogen werden, wird das genannte Netz bzw. die genannte Seil- und/oder Gurtanordnung wieder auf die genannte zweite Wickeltrommel aufgewickelt, während die erste Wickeltrommel die zuvor aufgewickelte Abdeckplane wieder abwickelt.

Wird die Abdeckplane aufgezogen, um die Dachöffnung zu öffnen, wird anstelle der Abdeckplane das genannte Netz über die Dachöffnung gezogen, um die gewünschte Luftzirkulation durch die geöffnete Dachöffnung zu ermöglichen. Alternativ oder zusätzlich zu dem genannten Netz kann die Riemen- und/oder Seilanordnung, die sich von der Wickeltrommel abwickelt, entlang der Dachöffnung anstelle der zurückgezogenen Abdeckplane ausbreiten, wobei sich die Seile bzw. Riemen seitlich neben der Dachöffnung und/oder auch über die Dachöffnung legen können.

Das genannte Netz kann dabei grundsätzlich verschieden ausgebildet sein, insbesondere in Form eines Maschennetzes, welches aus Quer- und Längsschnüren bestehen kann, die miteinander gitterförmig verknüpft sein können. Die genannten Netzschnüre können dabei beispielsweise dünne Stahlseile, aber auch textile, beispielsweise gewebte oder geschlagene Seile, oder auch Kunststofffasern oder Faserbündel sein.

Alternativ oder zusätzlich kann das genannte Netz aber auch als perforierte Folie oder Folienstruktur ausgebildet sein, beispielsweise in Form eine Kunststofffolie oder -plane mit beispielsweise ausgestanzten Perforierungen. Insbesondere kann die genannte Netzstruktur, die an der lichtdurchlässigen Folie befestigt ist, auch von einem integralen einstückig von der Abdeckplane selbst gebildeten Planenabschnitt gebildet sein, der mit einer Perforierung versehen ist, um die gewünschte Luftzirkulation zu ermöglichen. Wird der perforierte Abdeckplanenabschnitt von der Wickeltrommel abgewickelt und über die Dachöffnung gezogen, wird der Luftdurchtritt ermöglicht. Wird umgekehrt der nicht perforierte Abschnitt der Abdeckplane über die Dachöffnung gezogen, ist diese dicht verschlossen.

Mit der Verwendung von zumindest einer Wickeltrommel kann die Abdeckplane nicht nur besonders platzsparend, sondern auch schonend, ohne zu knicken aufgezogen und verstaut werden, wenn die Dachöffnung geöffnet werden soll.

Alternativ oder zusätzlich zu einer solchen zumindest einen Wickeltrommel kann die Aufziehvorrichtung aber beispielsweise auch eine Raff- bzw. Reffvorrichtung umfassen, um die Abdeckplane nach Art eines Cabriodachs zusammenzuraffen bzw. -zufalten, wenn die Dachöffnung geöffnet werden soll. Durch das Zusammenraffen zumindest eines Abschnitts der Abdeckplane wird die genannte Abdeckplane zu einem Rand oder Abschnitt der Dachöffnung hin zusammengezogen und beispielsweise hin und hergehend nach Art einer Leporello-Faltung zusammengelegt. Hierzu kann beispielsweise ein vorzugsweise biegeschlaffes Zugelement wie beispielsweise ein Zugseil - oder auch mehrere Zugmittel über die Breite der Abdeckfolie verteilt - angeordnet sein, um den daran befestigten Planenabschnitt zu einer Planenseite hin einzuholen, so dass die Abdeckplane an dem Abschnitt, zu dem hin eingeholt wird, Falten wirft und dort eine Raffung ausführt.

Vorteilhafterweise kann ein solches bzw. können solche Raffseile entlang der Seillängsrichtung voneinander beabstandet an mehreren Punkten an der Abdeckplane befestigt sein, so dass das Seil bei auseinandergezogener Abdeckplane näherungsweise planenparallel verläuft und sich die Plane beim Einholen des Raffseils zwischen den Befestigungspunkten in Falten werfen kann.

Wird in der vorgenannten Weise zumindest eine Wickeltrommel verwendet, kann die Wickeltrommel selbst angetrieben werden und die Kräfte aufbringen, die die Abdeckplane aufziehen. In diesem Fall kann ein Antriebsmotor unmittelbar auf die genannte Wickeltrommel einwirken, um die Wickeltrommel rotatorisch anzutreiben. Alternativ oder zusätzlich können aber auch vor der Wickeltrommel ein paar Antriebswalzen vorgesehen sein, zwischen denen die Abdeckplane hindurchläuft und von diesen die Abdeckplane angetrieben bzw. eingezogen bzw. zwischen den Antriebswalzen hindurchgezogen werden kann. In diesem Fall kann die genannte Wickeltrommel lediglich als Speichertrommel fungieren, um den jeweils geforderten Abschnitt der Abdeckplane aufzuwickeln oder abzuwickeln.

Vorteilhafterweise jedoch kann die Wickeltrommel selbst angetrieben sein und die Abdeckplane selbst aufwickeln, um zusätzliche Antriebswalzen einzusparen.

Werden in der vorgenannten Weise zwei auf gegenüberliegenden Seiten der Dachöffnung angeordnete Wickeltrommeln verwenden, können vorteilhafterweise beide Wickeltrommeln jeweils mit einem Antriebsmotor versehen sein, um die Abdeckplane wahlweise in die eine Richtung oder in die andere Richtung ziehen und aufwickeln zu können.

Vorteilhafterweise können die beiden Antriebsmotoren der beiden Wickeltrommeln von einer gemeinsamen Steuervorrichtung her angesteuert werden, um die Wickelbewegungen der beiden Wickeltrommeln aufeinander abgestimmt auszuführen.

Insbesondere kann die genannte Steuervorrichtung dazu ausgebildet sein, beim Aufziehen der Abdeckplane den Antriebsmotor der einen Wickeltrommel, auf die die Abdeckplane aufgewickelt werden soll, zu betätigen und den Antriebsmotor der anderen Wickeltrommel, von der die Abdeckplane abgezogen wird, nicht zu betätigen, so dass die Abdeckplane gegen den Widerstand der nicht betätigten bzw. nicht angetriebenen Wickeltrommel abgezogen werden kann.

Alternativ oder zusätzlich kann die Steuervorrichtung jedoch auch einen Synchronbetriebsmodus umfassen, in dem die Antriebsmotoren der beiden gegenüberliegenden Wickeltrommeln synchron gegenläufig zueinander angetrieben werden, um die Abdeckplane auf die eine Wickeltrommel aufzuwickeln und gleichzeitig von der anderen Wickeltrommel abzuwickeln, wobei hier die Wickeltrommeln mit jeweils passenden Drehgeschwindigkeiten betätigt werden, um ein gleichmäßiges Auf- und Abwickeln zu gewährleisten ohne größere Falten zu werfen.

Je nach Dicke der Abdeckplane und/oder Anzahl der auf- und abzuspulenden Wickellagen kann der genannte Synchronbetriebsmodus dabei berücksichtigen, dass sich beim Aufwickeln auf die eine Wickeltrommel der effektive Wickeldurchmesser vergrößert und an der gegenüberliegenden Wickeltrommel durch das Abwickeln der Wickeldurchmesser der Plane verkleinert. Um diese gegenläufig größer und kleiner werdenden Wickeldurchmesser zu kompensieren, kann die Steuervorrichtung die Antriebsdrehzahlen der beiden Wickeltrommeln nicht exakt gleich halten, sondern einerseits größer und andererseits kleiner einstellen, um die sich ändernden Wickeldurchmesser zu kompensieren.

Beispielsweise kann hierfür eine Sensorik an der Wickeltrommel angeordnet sein, die den effektiven Wickeldurchmesser erfasst, um die Drehzahl des jeweiligen Antriebsmotors in Abhängigkeit des Wickeldurchmessers zu steuern.

Werden dünne Abdeckfolien verwendet, können Veränderungen des effektiven Wickeldurchmessers allerdings ggf. auch vernachlässigt werden.

Vorteilhafterweise kann die zumindest eine Wickeltrommel und/oder eine gegebenenfalls vorgesehene Umlenkrolle höhenverstellbar an dem Trägergerippe und/oder an einem Anschlussträger, mit dem das Dachmodul an der Dachkonstruktion befestigbar ist, gelagert sein, um die auf die Wickeltrommel auflaufende Abdeckplane in ihrem Anstellwinkel gegenüber der horizontalen und/oder gegenüber der Dachneigung variabel einstellen zu können. Wird die Umlenkrolle bzw. die gegebenenfalls vorgeschaltete Umlenkrolle höher gesetzt, verringert sich die Neigung der Abdeckplane im Endbereich am Rand der Dachöffnung. Wird umgekehrt die Wickeltrommel bzw. die gegebenenfalls vorgesehene Umlenkrolle tiefer gesetzt, kann die Abdeckplane eine stärkere Neigung zur Horizontalen bzw. eine steilere Ausrichtung einnehmen.

Die höhenverstellbare Lagerung für die Wickeltrommel und/oder gegebenenfalls vorgesehene Umlenkrolle kann grundsätzlich verschieden ausgebildet sein. Beispielsweise kann die Lagerung eine Schiebeführung beispielsweise in Form einer Langlochführung für die Wickeltrommel und/oder die Umlenkrolle aufweisen, so dass die Höhenstellung stufenlos über einen gewissen Bereich erfolgen kann. Alternativ oder zusätzlich kann auch ein Trommel- bzw. Walzenträger mit einem Lochbild versehen sein, um die Wickeltrommel bzw. die Umlenkrolle in verschiedene Höhenstellungen versetzen zu können.

Vorteilhafterweise kann in Weiterbildung der Erfindung das Trägerskelett höhenverstellbar gelagerte Trägerrippen und/oder Trägerrippenabschnitte aufweisen, um die Trägerrippen in unterschiedlichen Höhenstellungen über der Dachkonstruktion befestigen zu können. Alternativ oder zusätzlich können die Trägerrippen des Trägerskeletts in ihrer Form und/oder Konturierung und/oder Länge verstellbar ausgebildet sein, um die von dem Trägergerippe für die Abdeckplane vorgegebene Hüllkontur an die Dachwölbung und/oder -konturierung anpassen zu können. Insbesondere können durch in der Form verstellbare Trägerrippen unterschiedliche Wölbungen für unterschiedliche Dachfirste einstellbar sein, indem die Trägerrippen in unterschiedlich stark gekrümmte Konturen verbracht werden.

Insbesondere können die Trägerrippen Endabschnitte aufweisen, die gegenüber einem Zentralabschnitt der Trägerrippen abwinkelbar und/oder in unterschiedliche Krümmungen bringbar sind. Beispielsweise können die genannten Endabschnitte über Gelenke an Zentralabschnitten der Trägerrippen befestigt sein, wobei anstelle solcher Gelenke gegebenenfalls auch elastisch biegbare Rippenabschnitte vorgesehen sein können.

Vorteilhafterweise kann ein Anschlussträger, mit dem das Trägergerippe an einem unteren Rand der Dachöffnung oder an einem oberen Rand der Dachöffnung befestigt werden kann, eine höhenverstellbare Lagerung für die Enden der Trägerrippen aufweisen, wobei eine solche höhenverstellbare Lagerung beispielsweise eine Schiebeführung umfassen kann, entlang derer die Trägerrippenenden mit einer Höhenkomponente gegenüber der Dachkonstruktion verschiebbar sind. Alternativ oder zusätzlich kann beispielsweise auch ein Lochbild in dem Anschlussträger vorgesehen sein, welches es erlaubt, die Trägerrippen in unterschiedlichen Höhenstellungen an dem Anschlussträger zu befestigen.

Die Höhenverstellung der Trägerrippen und/oder die Höhenverstellung der Wickeltrommeln kann in vertikaler Richtung oder in dazu spitzwinklig geneigter Richtung und somit mit einer horizontalen Verstellkomponente ausgebildet sein.

Die Erfindung wird nachfolgend anhand eines bevorzugten Ausführungsbeispiels und zugehöriger Zeichnungen näher erläutert. In den Zeichnungen zeigen:
- Fig. 1: eine perspektivische Darstellung eines lichtdurchlässigen Dachmoduls, das nach einer vorteilhaften Ausführung der Erfindung in Form eines Lichtfirsts ausgebildet und in einer teilweise geöffneten Darstellung gezeigt ist,
- Fig. 2: eine perspektivische Darstellung des Dachmoduls aus Fig. 1 in einer zweiten, weiter geöffneten Stellung der Abdeckplanung,
- Fig. 3: eine perspektivische Darstellung des Dachmoduls aus den vorhergehenden Figuren in einer vollständig geöffneten Stellung, die die bogenförmige Konturierung der Trägerrippen zeigt,
- Fig. 4: eine perspektivische Darstellung des Dachmoduls aus den vorhergehenden Figuren in einer vollständig geschlossenen Stellung der Abdeckplane,
- Fig. 5: eine perspektivische Darstellung des Dachmoduls aus den vorhergehenden Figuren, wobei im Vergleich zu Fig. 1 eine von der anderen Seite her teilweise geöffnete Stellung der Abdeckplane gezeigt ist,
- Fig. 6: eine perspektivische Darstellung des Dachmoduls aus den vorhergehenden Figuren in einer vollständig geöffneten Stellung, in der anstelle der Abdeckfolie ein Netz über dem Trägerskelett liegt,
- Fig. 7: eine Frontansicht des Dachmoduls aus den vorhergehenden Figuren in einer Blickrichtung parallel zur Längsachse des Dachfirsts,
- Fig. 8: eine Frontansicht des gesamten Dachs, auf das das lichtdurchlässige Dachmodul aufgesetzt ist, in einer Blickrichtung parallel zur Längsrichtung des Dachfirsts,
- Fig. 9: eine Draufsicht auf das Trägerskelett des Dachmoduls aus den vorhergehenden Figuren, wobei die gebogenen Querrippen und die in Längsrichtung verlaufenden Versteifungsrippen gezeigt sind,

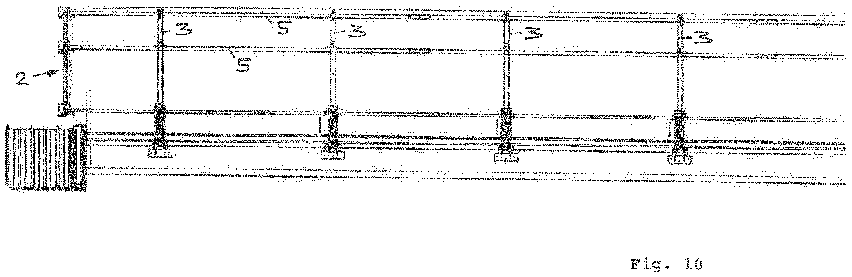

- Fig. 10: eine Seitenansicht des Trägerskeletts, das die Anschlussmittel zum Anschließen an die Dachkonstruktion zeigt,

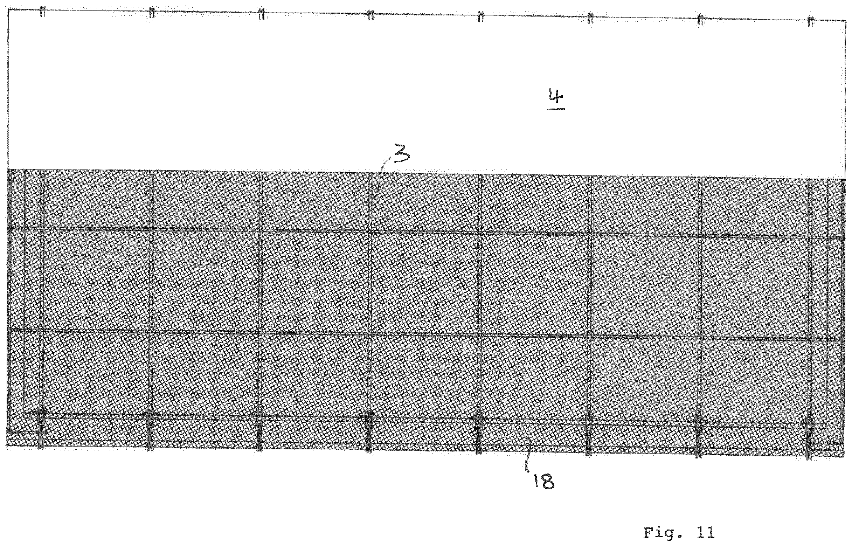

- Fig. 11: eine Draufsicht auf das Dachmodul in einer teilweise geöffneten Stellung der Abdeckplane, in der ein Teil des Trägergerippes von der Abdeckplane und ein Teil des Trägergerippes von einem Netz abgedeckt ist.

Wie die Figuren zeigen, kann das lichtdurchlässige Dachmodul insbesondere einen Lichtfirst bilden, um eine im First eines Daches vorgesehene Dachöffnung zu überspannen. Die Ausbildung als Dachfirst bzw. Lichtfirst ist jedoch nicht zwingend. Das Dachmodul könnte auch als Lichtöffnung in einer schrägen, ebenen oder gewölbten Dachfläche beispielsweise eines Pultdachs oder eines Walmdachs ausgebildet sein.

Wie die Figuren zeigen, umfasst das Dachmodul 1 ein Trägerskelett 2, welches eine Mehrzahl von Trägerrippen 3 umfassen kann, die zusammen eine harmonisch geformte, gleichmäßige, insbesondere stetige Hüllfläche definieren können, die eine Abdeckfolie 4 bzw. -plane abstützt.

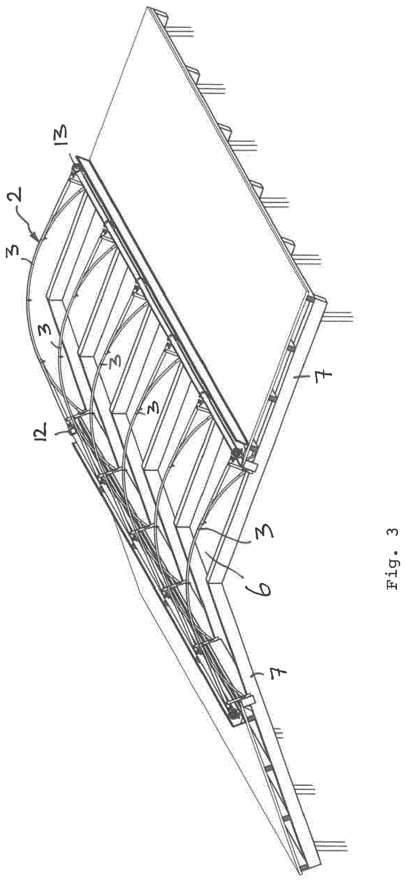

Wie die Figur 3 verdeutlicht, können sich die genannten Trägerrippen 3 zumindest näherungsweise in einer Richtung erstrecken, in der die Abdeckplane 4 aufgezogen und zugezogen werden kann, so dass die Trägerrippen 3 die Abdeckplane 4 kontinuierlich abstützen, wenn diese auf- und zugezogen wird.

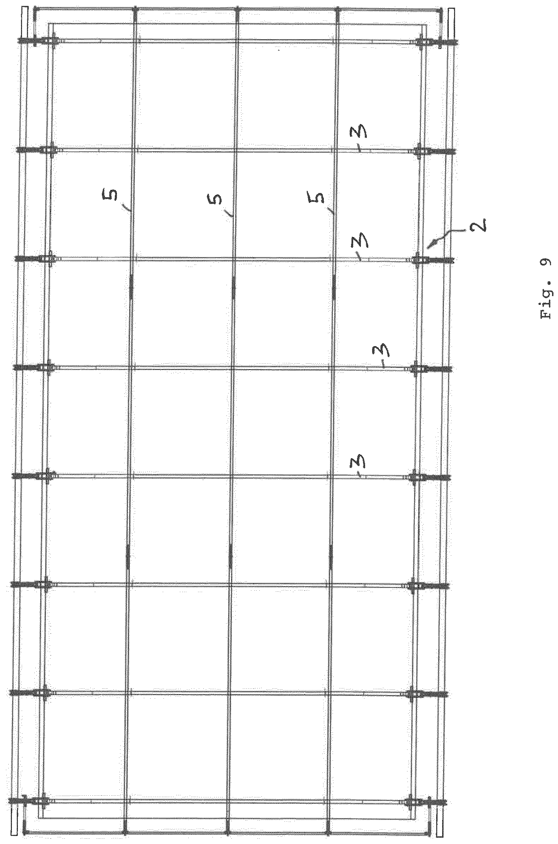

Wie weiterhin die Figur 9 verdeutlicht, können die genannten Trägerrippen 3 durch Querrippen 5 miteinander verbunden sein, um eine unerwünschte Relativbewegung der Trägerrippen 3 zu vermeiden und das Trägerskelett 2 insgesamt zu stabilisieren.

Das genannte Trägerskelett 2 kann dabei über oder in einer Dachöffnung 6 montiert werden, in welcher Dachöffnung 6 die Eindeckung des Dachs eine entsprechende Aussparung aufweisen kann.

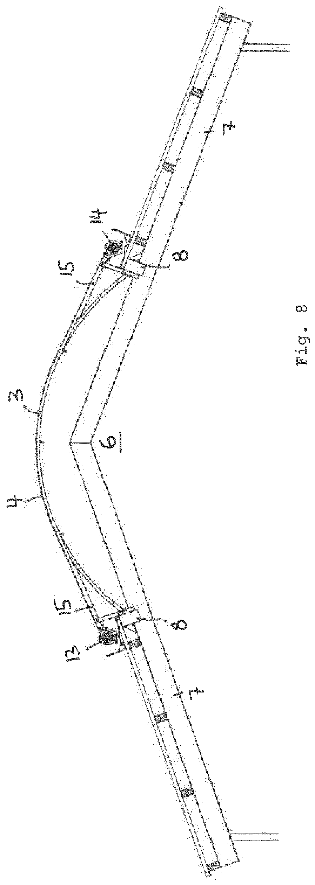

Ist die Dachöffnung 6 im Bereich des Dachfirsts, können sich die genannten Trägerrippen 3 vorzugsweise bogenförmig über den Dachfirst hinweg erstrecken, wie dies die Figuren 3 und 8 zeigen. Hierzu können die Trägerrippen 3 bogenförmigen oder parabelförmig oder in ähnlicher Weise gekrümmt ausgebildet sein.

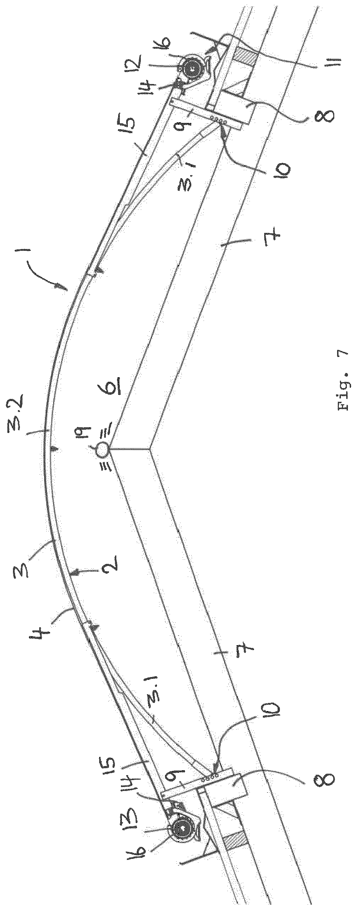

Das Trägerskelett 2 des Dachmoduls 1 kann an die Dachkonstruktion angeschlossen und daran befestigt werden, beispielsweise an Dachsparren 7 und/oder an Pfetten 8. Wie Fig. 7 zeigt, kann das Trägerskelett 2 hierzu beispielsweise Anschlussträger 9 umfassen, die an der Dachkonstruktion starr befestigt werden können und die genannten Trägerrippen 3 tragen.

Vorteilhafterweise können die Trägerrippen 3, die sich entlang der unteren und/oder oberen Rändern der Dachöffnung erstrecken können, höhenverstellbar gelagert und befestigt sein, beispielsweise indem an den genannten Anschlussträgern 9 eine Schiebeführung für die Trägerrippen 3 vorgesehen ist. Wie Figur 7 zeigt, kann in den Anschlussträgern 9 auch ein Lochbild ausgebildet sein, so dass Endabschnitte der Trägerrippen 3 in verschiedenen Stellungen an den Anschlussträgern 9 befestigt werden können.

Die genannten Endabschnitte 3.1 der Trägerrippen 3 können vorteilhafterweise gegenüber einem Mittelabschnitt 3.2 der Trägerrippen 3 abknickbar und/oder abbiegbar sein, beispielsweise durch eine elastische oder gelenkige Verbindung zwischen den genannten Abschnitten.

Durch die höhenverstellbare Lagerung 10 der Trägerrippen 3 kann das Trägerskelett 2 in einfacher Weise an verschiedene Dachneigungen und/oder Firsthöhen angepasst werden.

Alternativ oder zusätzlich zu einer solchen verstellbaren Lagerung der Trägerrippenende können die Trägerrippen 3 auch teleskopierbar und/oder längenverstellbar ausgebildet sein, um an verschieden breite Dachöffnungen angepasst werden zu können.

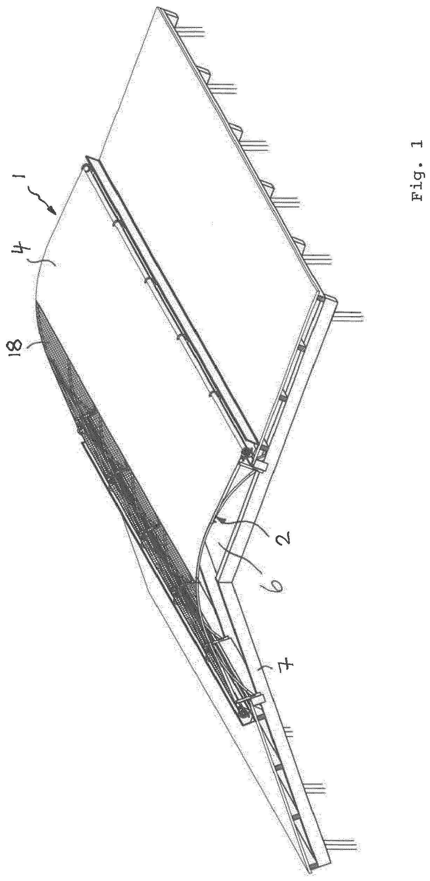

Wie beispielsweise die Figuren 1, 3 und 7 zeigen, umfasst das Dachmodul 1 weiterhin eine Aufziehvorrichtung 11, mit Hilfe derer, die sich über das Trägerskelett 2 erstreckende Abdeckplane 4 aufgezogen werden kann, um die Dachöffnung 6 zumindest teilweise oder auch vollständig öffnen zu können. Die genannte Aufziehvorrichtung 11 kann dabei an dem Trägerskelett 2 angeordnet und/oder befestigt sein, insbesondere beispielsweise an den genannten Anschlussträgern 9, mit denen das Trägerskelett 2 an die angrenzende Dachkonstruktion montiert wird. Grundsätzlich könnte die genannte Aufziehvorrichtung 11 aber auch separat von dem Trägerskelett 2 an der die Dachöffnung 6 umgebenden Dachkonstruktion befestigt sein.

Die genannte Aufziehvorrichtung 11 kann vorteilhafterweise zwei Wickeltrommeln 12 und 13 umfassen, die im Bereich der Enden der länglichen Trägerrippen 3 angeordnet sein können und sich zumindest näherungsweise parallel zur Längsrichtung des Dachfirsts und/oder entlang der Längs- bzw. Unterkanten der Dachöffnung 6 erstrecken können. Vorteilhafterweise sind die beiden Wickeltrommeln 12 und 13 ein Stück weit mit den Dachrändern, die die Dachöffnung 6 begrenzen können, überlappend angeordnet, so dass die auf die Wickeltrommeln 12 und 13 aufzuwickelnde Abdeckplane 4 die Dachöffnung 6 ausreichend weit überlappt und von der Abdeckplane 4 ablaufendes Regenwasser auf die geschlossene Dachfläche geleitet wird.

Die genannten Wickeltrommeln 12 und 13 können insbesondere an den Anschlussträgern 9 gelagert sein, mit Hilfe derer das Trägerskelett 2 an der Dachkonstruktion befestigt werden kann. Wie Figur 7 zeigt, können die genannten Anschlussträger 9 ein Stück weit über die Eindeckung des Dachs am Rand der Dachöffnung 6 nach oben vorspringen und eine Trommellagerung 14 tragen, welche die Wickeltrommein 12 und 13 jeweils drehbar lagert.

Vorteilhafterweise sind auch die genannten Wickeltrommeln 12 und 13 höhenverstellbar gelagert. Hierzu kann die genannte Trommellagerung 14 beispielsweise eine Schiebeführung umfassen und/oder selbst verschiebbar an den Anschlussträgern 9 gelagert sein. Alternativ oder zusätzlich können die genannten Anschlussträger 9 auch ein Lochbild aufweisen, um die Befestigungspunkte für die Trommellagerung 14 versetzen und somit eine Höheneinstellung erzielen zu können. Durch Höhenverstellen der Wickeltrommeln 12 und 13 kann die Neigung der Randabschnitte der Abdeckplane 4 eingestellt werden, und an verschiedene Dachkonstruktionen und Erfordernisse angepasst werden zu können.

Vorteilhafterweise führen von den genannten Wickeltrommeln 12 und 13 Zulaufrippen 15 zu den Trägerrippen 3, um die Abdeckplane 4 zwischen den Wickeltrommein 12 und 13 und den Trägerrippen 3 ebenfalls abzustützen und ein sanftes Einlaufen in die Wickeltrommeln 12 und 13 sicherzustellen.

Die genannten Zulaufrippen 15 können vorteilhafterweise zusammen mit den Wickeltrommeln 12 und 13 in der beschriebenen Weise höhenverstellt werden, indem sie an den Anschlussträger 9 in verschiedenen Positionen verstellt werden.

Die genannten Wickeltrommeln 12 und 13 sind vorteilhafterweise jeweils von einem nur angedeuteten Antriebsmotor 16 rotatorisch antreibbar, wobei der genannte Antriebsmotor 16 beispielsweise ein Elektromotor sein kann, der gegebenenfalls über eine Getriebestufe die Wickeltrommeln antreibt.

Eine gemeinsame Steuervorrichtung 19 aktiviert und steuert die genannten Antriebsmotoren 16 insbesondere derart, dass die Wickeltrommeln 12 und 13 zueinander gegenläufig arbeiten, um die Abdeckplane 4 auf eine Wickeltrommel aufzuwickeln und gleichzeitig von der anderen Wickeltrommel abzuwickeln.

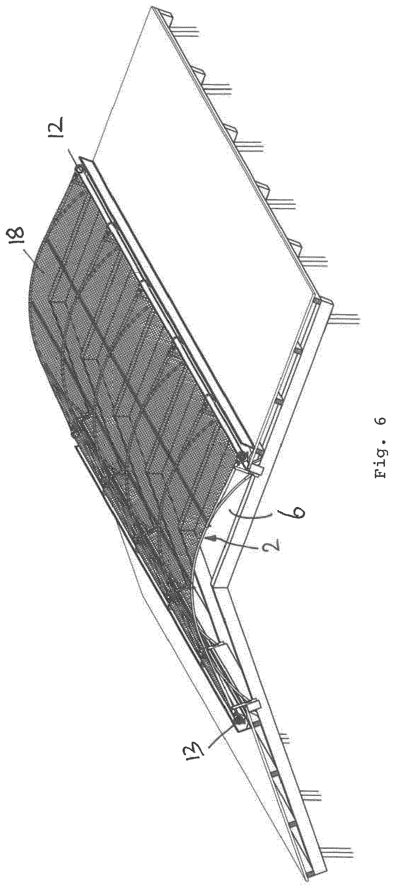

Wie ein Vergleich der Figuren 1 bis 6 zeigt, kann vorteilhafterweise an beiden gegenüberliegenden Enden der Abdeckplane 4, mit welchen die Abdeckplane 4 auf die genannten Wickeltrommeln 12 und 13 aufwickelbar ist, jeweils ein Netz 18 befestigt, das die Abdeckplane 4 an derem jeweiligen Ende sozusagen verlängert und ebenfalls auf die genannten Wickeltrommeln 12 und 13 aufgewickelt ist.

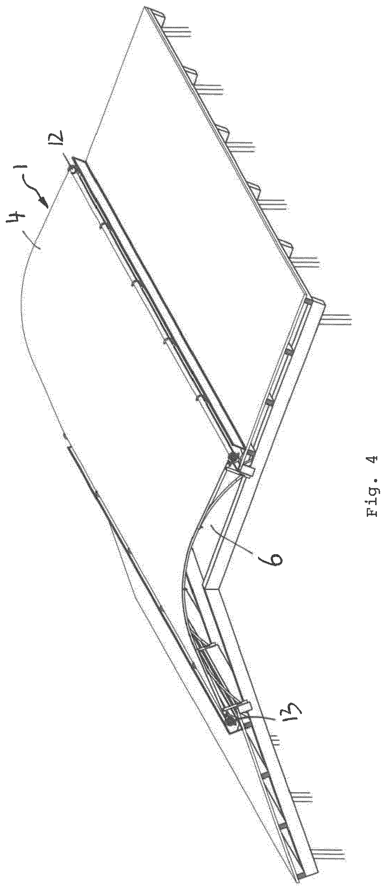

Die lichtdurchlässige, wasserdichte Abdeckplane 4 selbst ist dabei vorteilhafterweise ausreichend lang ausgebildet, um sich vollständig über die Trägerrippen 3 erstrecken und die Dachöffnung 6 vollständig abdecken und verschließen zu können, wie dies beispielsweise die Figur 4 zeigt. In der vollständig geschlossenen Stellung kann die Abdeckplane 4 dabei vorteilhafterweise an jedem ihrer Enden ein Stück weit auf die Wickeltrommel 12 bzw. 13 aufgewickelt sein, um einen dichten Abschluss der Dachöffnung 6 sicherstellen zu können.

Die genannte Abdeckplane 4 kann dabei eine Kunststofffolie, insbesondere auch in Form einer mehrlagigen, eine Armierung aufweisenden Verbundfolie ausgebildet sein, um eine ausreichende Festigkeit aufzuweisen, wobei insbesondere in Zugrichtung, also etwa senkrecht zur Längsachse der Wickeltrommeln Zugverstärkungen beispielsweise in Form von Zugleinen und/oder -faserbündeln eingewebt sein können. Beispielsweise kann die Abdeckplane 4 in Form eines Folienlaminats ausgebildet sein, wie es beispielsweise als Segeltuch für Bootssegel bekannt ist.

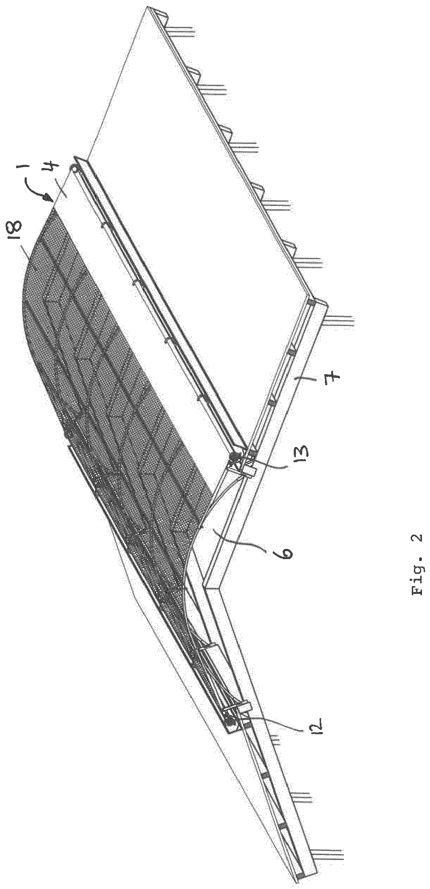

Um die Dachöffnung 6 zumindest teilweise zu öffnen, wird die Abdeckplane 4 von der Aufziehvorrichtung 11 zu einer Seite hin aufgezogen. Insbesondere kann eine der Wickeltrommeln 12 und 13 vom jeweiligen Antriebsmotor 16 angetrieben werden, um die Abdeckplane 4 aufzuwickeln. Hierdurch wird von der gegenüberliegenden Wickeltrommel das an der Abdeckplane 4 befestigte Netz 18 abgezogen, so dass sich das Netz 18 Stück für Stück anstelle der Abdeckplane 4 über das Trägerskelett 2 legt, wie dies beispielsweise die Figuren 1 und 2 zeigen.

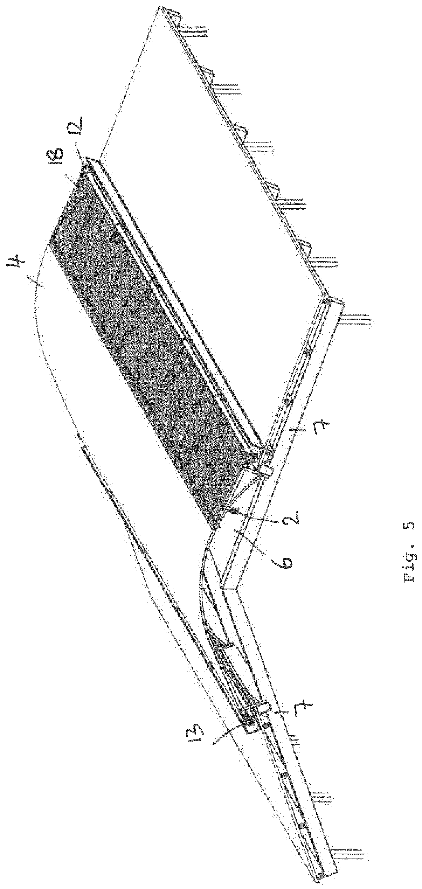

Da vorteilhafterweise an beiden gegenüberliegenden Enden der Abdeckplane 5 ein solches Netz 18 angebracht ist, kann die Dachöffnung 6 von beiden Seiten bzw. Rändern her geöffnet werden, wie dies ein Vergleich beispielsweise der Figuren 1 und 5 zeigt.

Vorteilhafterweise ist zumindest eines der beiden Netze 18 so lange ausgebildet, dass sich das Netz 18 komplett über die Trägerrippen 3 erstrecken und die Dachöffnung 6 vollständig geöffnet werden kann.

Durch die Perforierung bzw. die Maschenstruktur des Netzes 18 kann Luft durch die Dachöffnung 6 zirkulieren, insbesondere aufgeheizte Innenraumluft entweichen und somit das Raumklima deutlich verbessert werden. Gleichzeitig ist die Dachöffnung 6 nicht mehr wasserdicht verschlossen, so dass gegebenenfalls auch Regen in das Gebäude eintreten kann, was je nach Gebäudetyp gegebenenfalls auch gewünscht sein kann, um darin ein naturnahes Klima zu schaffen.

Die Maschenweite und/oder die Größe der Aussparungen der Netzstruktur 18 kann grundsätzlich unterschiedlich gewählt bzw. bemessen sein, wobei vorteilhafterweise eine ausreichend kleine Maschenweite verwendet wird, um das Eindringen von Vögeln in das Gebäudeinnere zu vermeiden. Gleichzeitig oder unabhängig hiervon kann jedoch - beispielsweise durch ausreichend dünne Dimensionierung der Netzfäden bzw. -seile - das Verhältnis von Aussparungen zu Netzmaterial sehr groß bemessen sein, um eine ausreichende Luftzirkulation bzw. einfachen Luftdurchtritt zu ermöglichen. Beispielsweise kann mehr als 75% der Netzfläche ausgespart bzw. weniger als 25% der Netzfläche von den Netzfäden belegt sein.

## Patentansprüche

1. Lichtdurchlässiges Dachmodul, insbesondere Lichtfirst mit einem Trägerskelett (2) zum Überspannen einer Dachöffnung (6) und zum Befestigen an einer die Dachöffnung (6) umgebenden Dachkonstruktion, sowie einer lichtdurchlässigen Abdeckplane (4), die vom Trägerskelett (2) getragen über die Dachöffnung (6) legbar ist, **dadurch gekennzeichnet, dass** die Abdeckplane (4) beweglich gelagert ist und eine Aufziehvorrichtung (11) zum Aufziehen der Abdeckplane (4) zum Öffnen der Dachöffnung (6) vorgesehen ist.

2. Lichtdurchlässiges Dachmodul nach dem vorhergehenden Anspruch, wobei die Aufziehvorrichtung (11) zumindest eine Wickeltrommel (12, 13) zum Aufwickeln der Abdeckplane (4) zum Öffnen der Dachöffnung (6) umfasst.

3. Lichtdurchlässiges Dachmodul nach einem der vorhergehenden Ansprüche, wobei die Aufziehvorrichtung (11) zwei an gegenüberliegenden Abschnitten des Trägerskeletts (2) angeordnete Wickeltrommeln (12, 13) umfasst, von denen beim Öffnen der Dachöffnung (6) eine zum Aufwickeln und die andere zum Abwickeln der Abdeckplane (4) vorgesehen ist, wobei auf die beim Öffnen abwickelnde Wickeltrommel (12, 13) ein Netz (18) und/oder ein Seil- und/oder Gurtanordnung aufgewickelt ist, wobei das genannte Netz beziehungsweise die genannte Seil- und/oder Gurtanordnung an der Abdeckplane (4) befestigt ist und beim Aufziehen der Abdeckplane (4) zum Öffnen der Dachöffnung (6) anstelle der Abdeckplane (4) über die Dachöffnung (6) und/oder an der Dachöffnung (6) entlang vorbeiziehbar ist.

4. Lichtdurchlässiges Dachmodul nach den vorhergehenden Ansprüchen, wobei auf jeder der beiden Wickeltrommeln (12, 13) ein Netz (18) und/oder eine Seil- und/oder Gurtanordnung aufgewickelt ist, so dass die Dachöffnung (6) von gegenüberliegenden Seiten her zu öffnen ist.

5. Lichtdurchlässiges Dachmodul nach einem der Ansprüche 2 bis 4, wobei die zumindest eine Wickeltrommel (12, 13) oder beide Wickeltrommeln (12, 13) sich mit ihrer Längs- oder Wickelachse im Wesentlichen senkrecht zur Längsrichtung von Trägerrippen (3) des Trägerskeletts (2) erstrecken, und/oder sich entlang gegenüberliegenden Rändern der Dachöffnung (6) erstrecken.

6. Lichtdurchlässiges Dachmodul nach einem der vorhergehenden Ansprüche 2 bis 5, wobei die Abdeckplane (4) an ihrem Randabschnitt, der von einer Wickeltrommel abwickelbar ist, zumindest einen Zugkraftverteiler und/oder eine Zugkraftverstärkung zum Verteilen und/oder Einleiten der Zugkräfte beim Aufwickeln aufweist, wobei der genannte Zugkraftverteiler und/oder die genannte Zugkraftverstärkung vorzugsweise einen randseitig an der Abdeckplane befestigten Längsstab und/oder eine Materialaufdoppelung umfasst.

7. Lichtdurchlässiges Dachmodul nach einem der vorhergehenden Ansprüche, wobei die Aufziehvorrichtung (11) zumindest einen Antriebsmotor zum motorischen Aufziehen der Abdeckplane (4) umfasst.

8. Lichtdurchlässiges Dachmodul nach dem vorhergehenden Anspruch in Verbindung mit einem der Ansprüche 2 bis 6, wobei der genannte Antriebsmotor (16) zum rotatorischen Antreiben der zumindest einen Wickeltrommel (12, 13) vorgesehen ist.

9. Lichtdurchlässiges Dachmodul nach dem vorhergehenden Anspruch, wobei für jede der beiden Wickeltrommeln (12, 13) jeweils zumindest ein Antriebsmotor (16) zum rotatorischen Antreiben der jeweiligen Wickeltrommel (12, 13) vorgesehen ist.

10. Lichtdurchlässiges Dachmodul nach dem vorhergehenden Anspruch, wobei die Antriebsmotoren (16) von einer gemeinsamen Steuervorrichtung ansteuerbar sind, wobei die Steuervorrichtung (19) zum aufeinander abgestimmten Betätigen der Antriebsmotoren (16) ausgebildet ist.

11. Lichtdurchlässiges Dachmodul nach dem vorhergehenden Anspruch, wobei die Steuervorrichtung (19) dazu ausgebildet ist
- beim Öffnen der Dachöffnung (6) nur einen der Antriebsmotoren (16) zu betätigen und/oder nur eine der Wickeltrommeln (12, 13) anzutreiben, sowie beim Schließen der Dachöffnung (6) nur den anderen Antriebsmotor (16) zu betätigen und/oder nur die andere Wickeltrommel (13) anzutreiben, oder
- beim Öffnen und Schließen der Dachöffnung (6) beide Antriebsmotoren (16) miteinander synchronisiert zu betätigen.

12. Lichtdurchlässiges Dachmodul nach einem der vorhergehenden Ansprüche, wobei das Trägerskelett (2) eine Mehrzahl von Trägerrippen (3) umfasst, die die Dachöffnung (6) überspannen und eine Hüllfläche definieren, auf der die Abdeckplane (4) aufliegt, wobei die genannten Trägerrippen (3) durch eine höhenverstellbare Lagerung (10) höhenverstellbar gelagert sind.

13. Lichtdurchlässiges Dachmodul nach dem vorhergehenden Anspruch, wobei die genannten Trägerrippen (3) längenveränderbar und/oder in verschieden gekrümmte Bogenformen bringbar ausgebildet sind.

14. Lichtdurchlässiges Dachmodul nach einem der vorhergehenden Ansprüche, wobei die Aufziehvorrichtung (11) relativ zu dem Trägerskelett (2) höhenverstellbar gelagert ist.

15. Lichtdurchlässiges Dachmodul nach dem vorhergehenden Anspruch, wobei die Höhenverstellvorrichtung der Aufziehvorrichtung (11) eine höhenverstellbare Lagerung für die zumindest eine Wickeltrommel (12, 13) umfasst.
